# FASCICULE DE BREVET EUROPEEN

(11) **EP 1 467 110 B1**
(45) Date de publication et mention de la délivrance du brevet: **08.08.2007**
(21) Numéro de dépôt: 04290748.5
(22) Date de dépôt: 19.03.2004
(51) Int. Cl.: F16B 39/22, F16B 33/02, F16B 39/284, F16B 39/36

(54) **"Vis et écrou borgne de fixation, notamment pour la fixation de plaques ou éléments de couverture ou de bardage"**
Schraube und Befestigungs-Überwurfmutter, insbesondere zur Befestigung von Platten oder Elementen für Abdeckungen bzw. Verkleidungen.
Screw and fastening cap nut, especially for fixing panels or elements for covering or cladding.

(30) Priorité: 20.03.2003 FR 0303427
(43) Date de publication de la demande: 13.10.2004
(73) Titulaire: Gissinger, Jean-Edouard, 08800 Thilay (FR); Gissinger, Charles, 08800 Thilay (FR); Thevenin, Patrick, 08150 Remilly les Pothees (FR); Thevenin, Stéphane, 51420 Witry Les Reims (FR)
(72) Inventeur: Gissinger, Jean-Edouard, 08800 Thilay (FR); Gissinger, Charles, 08800 Thilay (FR); Thevenin, Patrick, 08150 Remilly les Pothees (FR); Thevenin, Stéphane, 51420 Witry Les Reims (FR)
(74) Mandataire: Kaspar, Jean-Georges

(56) Documents cités:
- EP-A- 0 173 637
- FR-A- 2 404 141
- GB-A- 2 101 252
- US-A- 3 139 636
- US-A- 3 412 773
- US-A- 4 909 689
- US-A- 6 135 689
- US-B1- 6 213 885

## Description

L'invention est relative à une vis de fixation, notamment pour la fixation de plaques ou autres éléments de couverture ou de bardage sur des pannes, poutrelles, ou supports analogues.

L'invention est également relative à un écrou borgne à taraudage cylindrique destiné à coopérer avec une vis de fixation selon l'invention.

On connaît le document US-A-3 139 636 relatif à un procédé de déplacement d'une partie de filetage pour produire un verrouillage de filetage.

Dans les écrous autobloquants améliorés de US-A-3 139 636, on déforme plastiquement des parties discrètes ou sélectionnées de l'écrou, en provoquant un déplacement radial interne à l'intérieur de la matière et une déformation locale du taraudage des écrous.

Cette déformation présente l'inconvénient d'être une déformation plastique permanente.

On connaît le document US-A-6 213 885 B1 relatif un écrou crénelé, présentant des languettes ayant pour but de verrouiller l'écrou sur la vis par contrainte élastique en étant redressées parallèlement à l'axe central.

Ce document US 6 213 885 B1 décrit un principe de verrouillage non applicable à un écrou en aluminium, car l'effort élastique exercé par des languettes en aluminium est insuffisant pour effectuer un verrouillage.

Le document FR-A-2 404 141 décrit une vis autotaraudeuse pour la fixation de plaques ou autres éléments de couverture ou de bardage sur des pannes, poutrelles, ou supports analogues, comportant une partie formant tige munie d'un filetage ayant la dureté requise pour assurer le taraudage d'un trou dans ces pannes ou poutrelles, et une autre partie en forme d'écrou borgne en un matériau présentant la résistance requise à la corrosion. Cette autre partie en forme d'écrou borgne est initialement séparée de la partie formant tige, mais peut être adaptée par vissage sur cette partie formant tige pour compléter la vis autotaraudeuse.

L'objet du document FR-A-2 404 141 est fabriqué et commercialisé par la société FAYNOT de droit français sous la dénomination TETALU (marque déposée). Cette vis fabriquée et vendue sous l'appellation TETALU (marque déposée) est ainsi constituée d'une vis de fixation proprement dite comportant un filetage destiné à pénétrer dans une panne, une poutrelle ou un support analogue et d'un filetage de tête destiné à coopérer avec un écrou borgne résistant à la corrosion.

Cette vis TETALU (marque déposée) donne généralement satisfaction et permet une fixation efficace de plaques ou autres éléments de couverture ou de bardage sur des pannes, poutrelles ou supports analogues. Cependant, après une longue période d'installation, à l'occasion notamment de travaux de rénovation, cette vis TETALU (marque déposée) est difficilement démontable. En effet, lors du dévissage ou desserrage, l'écrou borgne se dévisse, tandis que le corps de vis ou vis proprement dite reste en place.

Pour remédier à cet inconvénient, on peut prévoir selon le mode de réalisation représenté sur la figure 2 du document FR-A-2 404 141 de munir 1a vis proprement dite d'une fente permettant la réception d'un tournevis ou d'une creusure destinée à recevoir une clé de manoeuvre. Cette solution peut permettre d'effectuer le démontage, qui reste néanmoins difficile et long à effectuer.

D'autres techniques de solidarisation permanente de l'écrou borgne à la vis proprement dite peuvent être envisagées : il est ainsi possible de réaliser un assemblage vissé et collé de l'écrou borgne et de la vis proprement dite, mais cette technique est onéreuse, difficile à mettre en oeuvre, et ne donne satisfaction que pour des couples de desserrage relativement faibles.

Un but de l'invention est de remédier aux inconvénients de la technique connue, tout en conservant les avantages de l'art antérieur, notamment les résultats obtenus selon le document FR-A-2 404 141.

Un autre but de l'invention est de remédier aux inconvénients de la technique connue sans utiliser de moyens annexes ou supplémentaires de solidarisation entre l'écrou borgne et la vis de fixation proprement dite.

L'invention a pour objet une vis de fixation, notamment pour la fixation de plaques ou autres éléments de couverture ou de bardage sur des pannes, poutrelles, ou supports analogues, comportant une partie de fixation formant tige munie d'un filetage et une partie de tête munie d'un filetage destiné à coopérer avec le taraudage d'un écrou borgne résistant à la corrosion, caractérisée par le fait que le filetage de la partie de tête destiné à coopérer avec le taraudage dudit écrou borgne présente une conformation interpénétrant la conformation du taraudage dudit écrou borgne, de manière à réaliser un coincement mécanique par déformation élastoplastique de la partie de tête et dudit écrou borgne.

Selon des modes de réalisation de l'invention:
- le filetage de la partie de tête destiné à coopérer avec le taraudage dudit écrou borgne peut être un filetage cylindrique destiné à interpénétrer un taraudage conique d'un écrou borgne, de manière à réaliser un coincement mécanique par déformation élastoplastique de la partie de tête et dudit écrou borgne,
- le filetage de la partie de tête destiné à coopérer avec le taraudage dudit écrou borgne peut être un filetage conique destiné à interpénétrer un taraudage conique d'un écrou borgne, de manière à réaliser un coincement mécanique par déformation élastoplastique de la partie de tête et dudit écrou borgne,
- le filetage de la partie de tête destiné à coopérer avec le taraudage dudit écrou borgne peut être un filetage conique destiné à interpénétrer un taraudage cylindrique d'un écrou borgne, de manière à réaliser un coincement mécanique par déformation élastoplastique de la partie de tête et dudit écrou borgne,
- le filetage de la partie de tête destiné à coopérer avec le taraudage dudit écrou borgne peut être un filetage conique à fond de filet et cylindrique à flanc de filet destiné à interpénétrer un taraudage cylindrique d'un écrou borgne, de manière à réaliser un coincement mécanique par déformation élastoplastique de la partie de tête et dudit écrou borgne,
- le demi-angle de la différence de conicité de la partie de tête et dudit écrou borgne est de préférence compris entre un et quatre degrés d'angle,
- le filetage peut être un filetage triangulaire,
- le filetage peut être un filetage trapézoïdal,
- le filetage peut être un filetage autonettoyant.

L'invention est également relative à un écrou borgne en matériau résistant à la corrosion adaptable à une vis de fixation selon l'invention.

L'invention sera mieux comprise grâce à la description qui va suivre donnée à titre d'exemple non limitatif en référence aux dessins annexés dans lesquels :
- La figure 1, représente schématiquement une vue en élévation latérale d'une vis de fixation selon l'invention.
- La figure 2, représente schématiquement une vue en élévation latérale d'une vis de fixation selon l'invention assemblée à un écrou borgne coopérant.
- Les figures 3 à 5, représentent schématiquement des vues successives en section illustrant l'assemblage d'un écrou borgne à la partie de tête d'une vis de fixation selon l'invention.
- La figure 6, représente schématiquement une vue en élévation latérale d'une autre vis de fixation selon l'invention.
- La figure 7 représente schématiquement une vue en section partielle d'un écrou borgne et d'une partie de tête d'une troisième vis de fixation selon l'invention.
- La figure 8 représente schématiquement une vue en section partielle d'un écrou borgne et d'une partie de tête d'une quatrième vis de fixation selon l'invention.

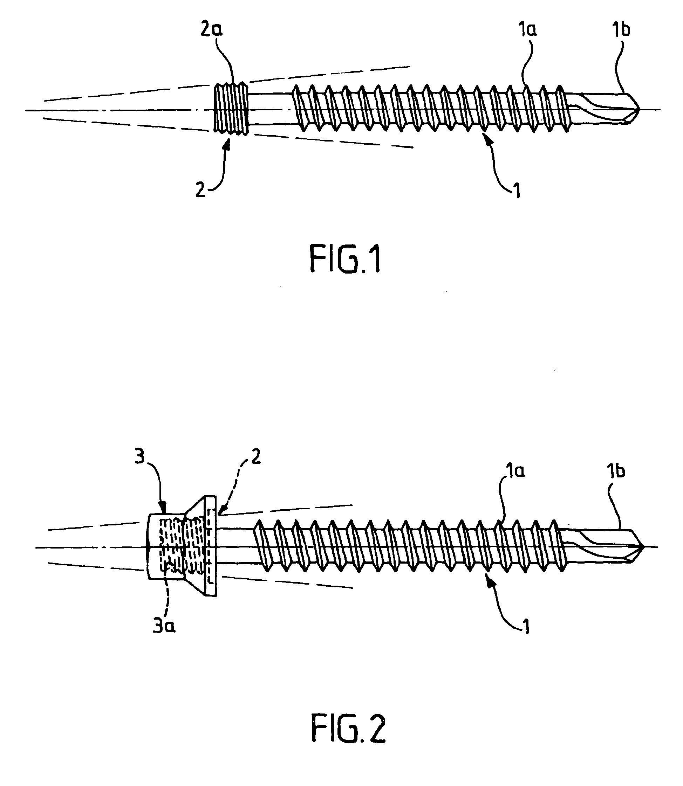

Sur la figure 1, une vis de fixation selon l'invention comporte, d'une part, une partie de fixation 1 autoperceuse et autotaraudeuse munie d'un filetage 1a et d'une extrémité 1b en forme de foret ; et, d'autre part, une partie 2 de tête comportant un filetage conique 2a.

Sur la figure 2, la vis de fixation selon l'invention est assemblée à un écrou borgne 3 en matériau résistant à la corrosion.

L'écrou borgne 3 est de préférence pourvu d'un taraudage cylindrique 3a dont le diamètre est compris entre le plus petit et le plus grand diamètre du filetage conique 2a.

Le taraudage 3 a de l'écrou 3 s'adapte sur le filetage 2a de la partie de tête 2 de la vis de fixation selon l'invention, en permettant de réaliser un coincement mécanique par déformation élastoplastique de l'écrou borgne 3, de manière à induire un couple de serrage entre l'écrou borgne 3 et la vis de fixation selon l'invention, et de manière à permettre des serrages et desserrages successifs en maintenant solidaires l'écrou 3 et la vis de fixation selon l'invention.

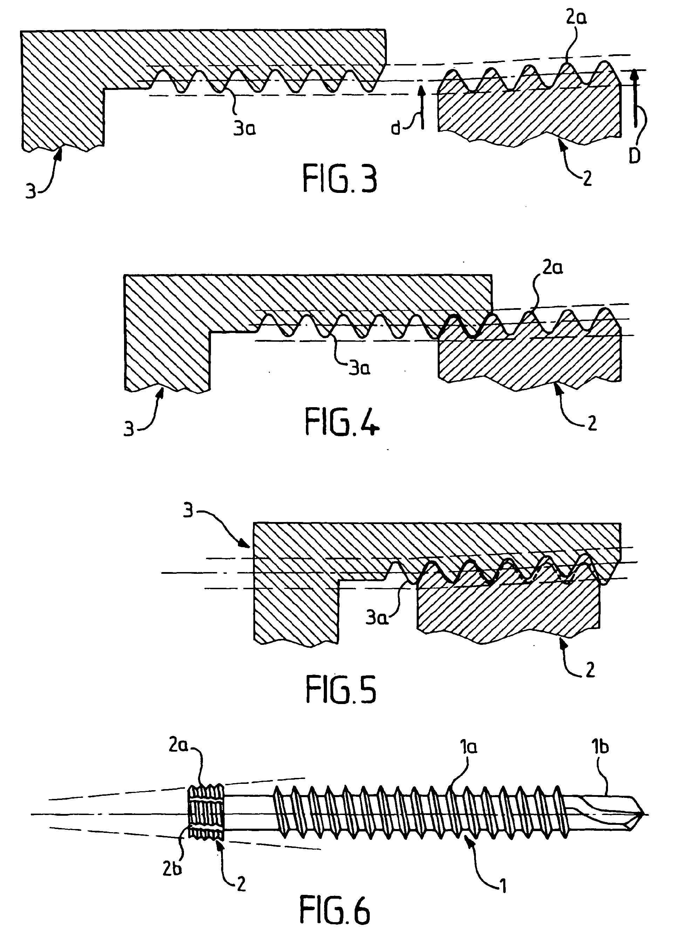

Sur la figure 3, l'écrou borgne 3 et la partie de tête 2 d'une vis de fixation selon l'invention sont représentés séparés.

Sur la figure 4, l'écrou borgne 3 est engagé sur la partie de tête 2 de la vis de fixation selon l'invention en étant vissé manuellement jusqu'à une profondeur correspondant au diamètre du taraudage cylindrique 3a.

Le taraudage cylindrique 3a présente un diamètre compris entre le plus petit diamètre d et le plus grand diamètre D du filetage conique 2a de la vis de fixation, de manière à pouvoir réaliser, en continuant le serrage, un coincement élasto-plastique par vissage de l'écrou 3 sur la partie de tête 2 de la vis de fixation.

Sur la figure 5, par application d'un couple de torsion, l'écrou 3 à taraudage cylindrique 3a est forcé sur le filetage conique 2a de la partie de tête de la vis de fixation selon l'invention.

Le couple de torsion et de serrage de l'écrou 3 sur la partie de tête 2 de la vis de fixation selon l'invention produit une déformation élastoplastique de la partie taraudée de l'écrou 3 en réalisant un élargissement conique et élastoplastique du matériau résistant à la corrosion de l'écrou 3.

Comme le taraudage cylindrique 3a présentant un diamètre compris entre le plus petit diamètre d et le plus grand diamètre D du filetage conique 2a de la vis de fixation est déformé par application de ce couple de torsion, on réalise un coincement élasto-plastique par vissage de l'écrou 3 sur la partie de tête 2 de la vis de fixation.

Des essais ont montré que l'effet de coincement par déformation élastoplastique est obtenu pour des valeurs de demi-angle du filetage conique 2a de la partie 2 de tête compris entre 2 et 4 degrés d'angle.

Cette plage de variation du demi-angle du filetage conique 2a de la partie de tête 2 de la vis de fixation selon l'invention permet d'obtenir une bonne solidarisation de l'écrou borgne 3 à la partie de tête 2, sans toutefois endommager le matériau résistant à la corrosion de l'écrou borgne 3.

L'invention décrite en référence à un filetage conique triangulaire 2a représenté aux figures 1 à 5 n'est pas limitée à cette forme de section, mais s'étend également à toute forme de section de filetage conique, en particulier à un filetage trapézoïdal.

Sur la figure 6, un autre mode de réalisation de l'invention est particulièrement adapté à la coopération avec des écrous borgnes 3 protégés par un revêtement couvrant également le taraudage 3a, par exemple par une peinture couvrant le taraudage 3a.

Dans ce mode de réalisation, la partie 2 de tête à filetage conique 2a comporte des rainures ou fentes de nettoyage 2b facilitant le grattage et l'accumulation du revêtement ou de la peinture protégeant le taraudage 3a de l'écrou borgne 3.

Le filetage 2a autonettoyant pourvu de fentes ou de rainures 2b présente l'avantage de réserver l'espace des fentes ou rainures 2b pour accumuler la peinture ou le revêtement grattés en permettant un assemblage efficace.

En outre, l'accumulation de la peinture ou du revêtement gratté dans les fentes ou rainures 2b du filetage autonettoyant 2a assure un blocage au vissage de l'écrou borgne 3 et augmente la résistance au dévissage de l'écrou borgne 3.

L'invention décrite en référence à plusieurs modes de réalisation particuliers n'y est nullement limitée, mais couvre au contraire toute modification de forme et toute variante de réalisation dans le cadre et l'esprit de l'invention, l'essentiel étant d'assurer un coincement élastoplastique de l'écrou sur la partie de tête d'une vis de fixation selon l'invention , grâce au fait que le filetage de la partie de tête destiné à coopérer avec le taraudage dudit écrou borgne présente une conformation interpénétrant la conformation du taraudage dudit écrou borgne.

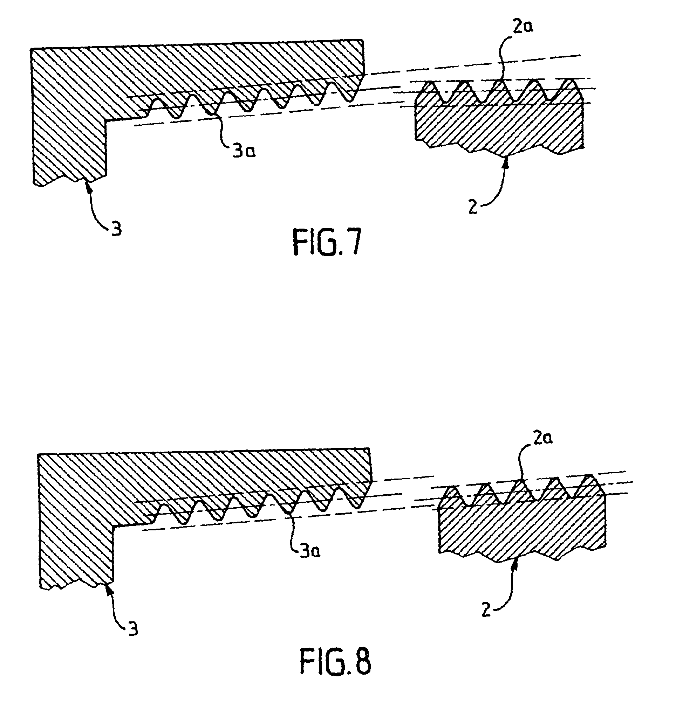

Ainsi, l'invention couvre notamment et également une troisième variante de réalisation représentée à la figure 7, dans laquelle le filetage 2a de la partie de tête 2 destiné à coopérer avec le taraudage 3a dudit écrou borgne 3 est un filetage 2a cylindrique destiné à interpénétrer un taraudage 3a conique d'un écrou borgne 3, de manière à réaliser un coincement mécanique par déformation élastoplastique de la partie 2 de tête et dudit écrou borgne 3.

Ainsi, l'invention couvre notamment et également une quatrième variante de réalisation représenté à la Figure 8, dans laquelle le filetage de la partie 2a de tête 2 destiné à coopérer avec le taraudage 3a dudit écrou borgne 3 est un filetage conique 2a destiné à interpénétrer un taraudage conique 3a d'un écrou borgne 3, de manière à réaliser un coincement mécanique par déformation élastoplastique de la partie 2 de tête et dudit écrou borgne 3.

Ainsi, l'invention couvre notamment et également une cinquième variante de réalisation, dans laquelle le filetage de la partie de tête destiné à coopérer avec le taraudage dudit écrou borgne est un filetage conique à fond de filet et cylindrique à flanc de filet destiné à interpénétrer un taraudage cylindrique d'un écrou borgne, de manière à réaliser un coincement mécanique par déformation élastoplastique de la partie de tête et dudit écrou borgne.

## Revendications

1. Vis de fixation, notamment pour la fixation de plaques ou autres éléments de couverture ou de bardage sur des pannes, poutrelles, ou supports analogues, comportant une partie de fixation formant tige (1) munie d'un filetage (1a) et une partie de tête (2) munie d'un filetage destiné à coopérer avec le taraudage d'un écrou borgne (3) résistant à la corrosion, **caractérisée par le fait que** le filetage (2a) de la partie de tête (2) destiné à coopérer avec le taraudage dudit écrou borgne (3) présente une conformation interpénétrant la conformation du taraudage (3a) de l'écrou borgne (3), de manière à réaliser un coincement mécanique de la partie de tête (2) et dudit écrou borgne (3) par déformation élastoplastique.

2. Vis de fixation selon la revendication 1, **caractérisée par le fait que** filetage (2a) de la partie de tête destiné à coopérer avec le taraudage dudit écrou borgne (3) est un filetage cylindrique destiné à interpénétrer un taraudage conique (3a) d'un écrou borgne, de manière à réaliser un coincement mécanique par déformation élastoplastique de la partie de tête et dudit écrou borgne.

3. Vis de fixation selon la revendication 1 , **caractérisée par le fait que** le filetage (2a) de la partie de tête destiné à coopérer avec le taraudage dudit écrou borgne est un filetage conique (2a) destiné à interpénétrer un taraudage conique (3a), d'un écrou borgne, de manière à réaliser un coincement mécanique par déformation élastoplastique de la partie de tête et dudit écrou borgne.

4. Vis de fixation selon la revendication 1 , **caractérisée par le fait que** le filetage de la partie de tête destiné à coopérer avec le taraudage dudit écrou borgne est un filetage conique (2a) à fond de filet et cylindrique à flanc de filet destiné à interpénétrer un taraudage cylindrique (3a) d'un écrou borgne, de manière à réaliser un coincement mécanique par déformation élastoplastique de la partie de tête et dudit écrou borgne,

5. Vis de fixation selon la revendication 1 , **caractérisée par le fait que** le filetage (2a) de la partie (2) de tête destiné à coopérer avec le taraudage (3a) dudit écrou borgne (3) est un filetage conique (2a) destiné à interpénétrer un taraudage cylindrique (3a) d'un écrou borgne (3), de manière à réaliser un coincement mécanique de la partie (2) de tête et dudit écrou borgne (3) par déformation élastoplastique,

6. Vis de fixation selon l'une quelconque des revendications précédentes, **caractérisée par le fait que** le demi-angle de la différence de conicité de la partie (2) de tête et dudit écrou borgne (3) est de préférence compris entre un et quatre degrés d'angle,

7. Vis de fixation selon l'une quelconque des revendications précédentes, **caractérisée par le fait que** le filetage (2a) est un filetage triangulaire,

8. Vis de fixation selon l'une quelconque des revendications précédentes, **caractérisée par le fait que** le filetage (2a) est un filetage trapézoïdal,

9. Vis de fixation selon l'une quelconque des revendications précédentes, **caractérisée par le fait que** le filetage (2a) est un filetage autonettoyant..

10. Ecrou borgne en matériau résistant à la corrosion comportant un taraudage (3a) adaptable à une vis de fixation selon l'une des revendications précédentes, **caractérisé par le fait que** le taraudage (3a) présente une conformation interpénétrant la conformation du filetage (2a) de la partie de tête (2) de ladite vis de fixation., de manière à réaliser un coincement mécanique de la partie de tête (2) et dudit écrou borgne (3) par déformation élastoplastique.

## Claims

1. A fixing screw, in particular for fixing plates or other covering or cladding elements on to purlins, beams or similar supports, comprising a fixing part forming a shank (1) provided with a thread (1 a) and a head part (2) provided with a thread which is intended to cooperate with the internal thread of a corrosion-resistant cap nut (3), **characterised by** the fact that the thread (2a) of the head part (2) which is intended to cooperate with the internal thread of said cap nut (3) has a shaping which interpenetrates the shaping of the internal thread (3a) of the cap nut (3), so as to bring about mechanical wedging of the head part (2) and said cap nut (3) by elastoplastic deformation.

2. A fixing screw according to Claim 1, **characterised by** the fact that the thread (2a) of the head part which is intended to cooperate with the internal thread of said cap nut (3) is a cylindrical thread which is intended to interpenetrate a tapering internal thread (3a) of a cap nut, so as to bring about mechanical wedging by elastoplastic deformation of the head part and said cap nut.

3. A fixing screw according to Claim 1, **characterised by** the fact that the thread (2a) of the head part which is intended to cooperate with the internal thread of said cap nut is a tapering thread (2a) which is intended to interpenetrate a tapering internal thread (3a) of a cap nut, so as to bring about mechanical wedging by elastoplastic deformation of the head part and said cap nut.

4. A fixing screw according to Claim 1, **characterised by** the fact that the thread of the head part which is intended to cooperate with the internal thread of said cap nut is a thread which is tapering (2a) at the thread root and cylindrical on the thread flank which is intended to interpenetrate a cylindrical internal thread (3a) of a cap nut, so as to bring about mechanical wedging by elastoplastic deformation of the head part and said cap nut.

5. A fixing screw according to Claim 1, **characterised by** the fact that the thread (2a) of the head part (2) which is intended to cooperate with the internal thread (3a) of said cap nut (3) is a tapering thread (2a) which is intended to interpenetrate a cylindrical thread (3a) of a cap nut (3), so as to bring about mechanical wedging of the head part (2) and said cap nut (3) by elastoplastic deformation.

6. A fixing screw according to any one of the preceding claims, **characterised by** the fact that the half-angle of the difference in conicity of the head part (2) and said cap nut (3) is preferably of between one and four degrees of angle.

7. A fixing screw according to any one of the preceding claims, **characterised by** the fact that the thread (2a) is a triangular thread.

8. A fixing screw according to any one of the preceding claims, **characterised by** the fact that the thread (2a) is a trapezoidal thread.

9. A fixing screw according to any one of the preceding claims, **characterised by** the fact that the thread (2a) is a self-cleaning thread.

10. A cap nut made of corrosion-resistant material comprising an internal thread (3a) which can be adapted to a fixing screw according to one of the preceding claims, **characterised by** the fact that the internal thread (3a) has a shaping which interpenetrates the shaping of the thread (2a) of the head part (2) of said fixing screw, so as to bring about mechanical wedging of the head part (2) and said cap nut (3) by elastoplastic deformation.

## Patentansprüche

1. Befestigungsschraube, insbesondere zur Befestigung von Platten oder anderen Bedachungs- oder Fassadenelementen an Dachpfetten, Balken oder ähnlichen Trägern, mit einem Befestigungsabschnitt, der einen mit einem Gewinde (1a) versehenen Schaft (1) bildet, und mit einem Kopfabschnitt (2), der mit einem Gewinde versehen ist, das dazu bestimmt ist, mit dem Innengewinde einer korrosionsbeständigen Hutmutter (3) zusammenzuwirken, **dadurch gekennzeichnet, daß** das Gewinde (2a) des Kopfabschnittes (2), das mit dem Innengewinde der Hutmutter (3) zusammenwirken soll, eine die Formgebung des Innengewindes (3a) der Hutmutter (3) durchdringende Formgebung hat, um ein mechanisches Verklemmen des Kopfabschnittes (2) und der Hutmutter (3) durch elastoplastische Verformung zu verwirklichen.

2. Befestigungsschraube nach Anspruch 1, **dadurch gekennzeichnet, daß** das Gewinde (2a) des Kopfabschnittes, das mit dem Innengewinde (3a) der Hutmutter (3) zusammenwirken soll, ein zylindrisches Gewinde ist, das dazu bestimmt ist, ein konisches Innengewinde (3a) einer Hutmutter zu durchdringen, um ein mechanisches Verklemmen durch elastoplastische Verformung des Kopfabschnittes und der Hutmutter zu verwirklichen.

3. Befestigungsschraube nach Anspruch 1, **dadurch gekennzeichnet, daß** das Gewinde (2a) des Kopfabschnittes, das mit dem Innengewinde der Hutmutter zusammenwirken soll, ein konisches Gewinde (2a) ist, das dazu bestimmt ist, ein konisches Innengewinde (3a) einer Hutmutter zu durchdringen, um ein mechanisches Verklemmen durch elastoplastische Verformung des Kopfabschnittes und der Hutmutter zu verwirklichen.

4. Befestigungsschraube nach Anspruch 1, **dadurch gekennzeichnet, daß** das Gewinde des Kopfabschnittes, das mit dem Innengewinde der Hutmutter zusammenwirken soll, ein am Gewindegrund konisches und an der Gewindeflanke zylindrisches Gewinde (2a) ist, das dazu bestimmt ist, ein zylindrisches Innengewinde (3a) einer Hutmutter zu durchdringen, um ein mechanisches Verklemmen durch elastoplastische Verformung des Kopfabschnittes und der Hutmutter zu verwirklichen.

5. Befestigungsschraube nach Anspruch 1, **dadurch gekennzeichnet, daß** das Gewinde (2a) des Kopfabschnittes (2), das mit dem Innengewinde (3a) der Hutmutter (3) zusammenwirken soll, ein konisches Gewinde (2a) ist, das dazu bestimmt ist, ein zylindrisches Innengewinde (3a) einer Hutmutter (3) zu durchdringen, um ein mechanisches Verklemmen des Kopfabschnittes (2) und der Hutmutter (3) durch elastoplastische Verformung zu verwirklichen.

6. Befestigungsschraube nach einem der vorhergehenden Ansprüche, **dadurch gekennzeichnet, daß** der Halbwinkel der Differenz der Konizität des Kopfabschnittes (2) und der Hutmutter (3) vorzugsweise ein bis vier Winkelgrade beträgt.

7. Befestigungsschraube nach einem der vorhergehenden Ansprüche, **dadurch gekennzeichnet, daß** das Gewinde (2a) ein dreieckiges Gewinde ist.

8. Befestigungsschraube nach einem der vorhergehenden Ansprüche, **dadurch gekennzeichnet, daß** das Gewinde (2a) ein trapezförmiges Gewinde ist.

9. Befestigungsschraube nach einem der vorhergehenden Ansprüche, **dadurch gekennzeichnet, daß** das Gewinde (2a) ein selbstreinigendes Gewinde ist.

10. Hutmutter aus einem korrosionsbeständigen Material, mit einem Innengewinde (3a), das an eine Befestigungsschraube nach einem der vorhergehenden Ansprüche anpaßbar ist, **dadurch gekennzeichnet, daß** das Innengewinde (3a) eine Formgebung aufweist, welche die Formgebung des Gewindes (2a) des Kopfabschnittes (2) der Befestigungsschraube derart durchdringt, daß ein mechanisches Verklemmen des Kopfabschnittes (2) und der Hutmutter (3) durch elastoplastische Verformung eintritt.
